# EUROPEAN PATENT SPECIFICATION

(11) **EP 4 339 490 B1**
(45) Date of publication and mention of the grant of the patent: **18.06.2025**
(21) Application number: 22196169.1
(22) Date of filing: 16.09.2022
(51) Int. Cl.: F16H 61/30, F15B 11/12

(54) **PNEUMATIC ACTUATOR WITH DAMPING FUNCTION**
PNEUMATISCHER AKTOR MIT DÄMPFUNGSFUNKTION
ACTIONNEUR PNEUMATIQUE AVEC FONCTION D'AMORTISSEMENT

(43) Date of publication of application: 20.03.2024
(73) Proprietor: ZF CV Systems Europe BV, 1170 Brüssel (BE)
(72) Inventor: OBOROWSKI, Przemyslaw, 59-830 Olszyna (PL); SOCHA, Przemyslaw, 53-311 Wroclaw (PL)
(74) Representative: Ohlendorf, Henrike

(56) References cited:
- DE-A1- 102011 007 019
- DE-A1- 102018 214 006
- DE-B- 1 002 202
- US-A- 5 125 326

## Description

The invention relates to a pneumatic actuator for actuating a functional element, in particular a functional element of a gearbox of a commercial vehicle, comprising a pneumatic cylinder. The pneumatic cylinder comprises a cylinder body defining a pneumatic chamber having a main axis and a cylinder head closing the pneumatic chamber. The pneumatic cylinder further comprises a pneumatic piston for actuating the functional element, wherein the pneumatic piston comprises a piston head received in the pneumatic chamber slidable along the main axis between a coupling position and a neutral position, wherein the piston head separates the pneumatic chamber into a first pressure chamber and a second pressure chamber. The pneumatic piston further comprises a piston rod extending along the main axis for connecting the piston head to the functional element.

In vehicles, in particular in commercial vehicles, there are multiple ways of implementing an automatic transmission. Besides automated gearboxes, automated manual transmission (AMT) systems are often used. AMT systems comprise a traditional manual transmission gearbox that is automatically actuated by one or more pneumatic actuators. The pneumatic actuators are connected to functional elements, for example to shifting forks. Upon actuation of the pneumatic actuator, a gear is shifted without a manual actuation of a gearshift lever by a vehicle driver.

DE1002202B relates to a pressure medium actuator, the working piston of which is designed as a double-acting piston and can be adjusted to the central position without the use of springs by force-fitting contact with the stop of a parallel auxiliary piston with a different piston surface, whereby the auxiliary piston is designed as a drag piston so that when acted upon by a pressure medium. Generally, pneumatic actuators comprise a pneumatic cylinder and a pneumatic piston. The pneumatic piston is movable relative to the pneumatic cylinder. Up-on movement, the piston actuates the functional element connected to the piston. For initiating such a movement of the piston, a piston head is received in a pneumatic chamber defined by a cylinder body of the pneumatic cylinder. The pneumatic piston is slidably arranged in the pneumatic chamber and movable back and forth along a main axis of the pneumatic chamber. Thereby, the piston is movable between a coupling position, wherein the functional element is engaging with a counter element, and a neutral position, wherein the functional element is not engaging with the counter element. When a pressure p2 in the second chamber is increased, the pneumatic piston is pushed in a positive stroke direction and a volume enclosed by the piston head and the pneumatic chamber is increased. A piston rod connected to the piston head protrudes out of the pneumatic chamber and actuates the functional element. As soon as the piston head approaches the neutral position, it must be decelerated to prevent a hard stop against the pneumatic cylinder. It is known to decelerate the piston head by pressuring the first pressure chamber with a delay to the second pressure chamber. For this purpose, a first pressure valve is used to decelerate the pneumatic piston and a second pressure valve is used to accelerate the pneumatic piston. This causes a high number of switching cycles for the pressure valves. Further, the deceleration results in high deceleration forces acting on the pneumatic cylinder and the pneumatic piston.

Therefore, it is an object of the invention to provide a cost efficient, durable, and reliable pneumatic actuator.

To solve this object, the present invention provides a pneumatic actuator according to independent claim 1.

The bypass allows the pressuring of the first pressure chamber by the second pressure chamber. The outflowing fluid creates a decelerating fluid mass in form of an airbag in front of the piston head next to the bypass. Consequently, a switching cycle of a pressure valve to decelerate the pneumatic piston can be saved.

Preferably, the pneumatic cylinder further comprises a first pressure valve for pressurizing and venting the first pressure chamber and/or a second pressure valve for pressuring and venting the second pressure chamber. In this case, the first pressure valve has a first cross sectional area perpendicular to the main axis and the second pressure valve has a second cross sectional area perpendicular to the main axis. The first cross sectional area and the second cross sectional area may be equal. Further, the bypass may have a third cross sectional area perpendicular to the main axis. The quotient of the first cross sectional area and the third cross sectional area may be less than 100:1 and/or more than 2:1, in particular less than 50:1 and/or more than 3:1, preferably less than 20:1 and/or more than 5:1, and further preferably about 10:1. The quotient of the second cross sectional area and the third cross sectional area may be less than 100:1 and/or more than 2:1, in particular less than 50:1 and/or more than 3:1, preferably less than 20:1 and/or more than 5:1, and further preferably about 10:1. An above mentioned quotient facilitates an optimal delay between the pressuring of the pressure chamber facing the active pressure valve and the pressure chamber facing away from the pressure valve. The first pressure valve and/or the second pressure valve may be formed as 3-2 directional control valves, wherein in a first position the pressure chamber is pressured and in a second position the pressure chamber is vented. Hence, the second pressure chamber can be pressurized by the second pressure valve to accelerate the pneumatic piston in positive stroke direction into the neutral position, wherein the first pressure chamber is pressurized by the second pressure valve through the bypass to decelerate the movement of the pneumatic piston in the neutral position with delay. A switching cycle of the first pressure valve is not necessary to decelerate the pneumatic piston in contrast to the state of the art. Further, the constant fluid flow from the second pressure chamber to the first pressure chamber results in a gentle deceleration of the pneumatic piston, which is associated with low deceleration forces acting on the pneumatic cylinder and the pneumatic piston.

Preferably, the bypass is formed by at least a trough hole extending parallel or oblique to the main axis. Through holes are easily manufactured and allow a specific flow of fluid. The at least one through hole may be arranged at a circular ring that is concentrical to the main axis. Such allocation of the at least one trough hole allows a homogenous fluid flow and a homogenous pressure balancing. The bypass may be made of two, three, four, five, six or more through holes, wherein the through holes having an angular distance to each other of 360° divided by the amount of used through holes.

According to the present invention, the pneumatic piston further comprises a piston collar, wherein the piston collar is preferably arranged concentrical to the main axis and partially encircles the piston rod. A first seal, in particular a first ring seal, is provided in the cylindrical body, wherein the piston rod extends through the first seal. In the neutral position the piston collar engages with the first seal and fluidically separates the first pressure chamber into a third pressure chamber and a fourth pressure chamber. Thereby, the piston collar is inserted in the inner diameter of the first seal. The volume of the third pressure chamber is significantly lower than the volume of the first pressure chamber, so after the separation the pressure in the third pressure chamber will increase more strongly than the pressure of the first pressure chamber due to the lower functional volume. This will reliably decelerate and at the end stop the pneumatic piston.

Preferably, the bypass is provided at or in the piston collar. The first pressure valve and/or the second pressure valve may be provided at the outer diameter of the cylindrical body, wherein the piston collar is arranged at the inner diameter. Therefore, the fluid inserted by one pressure valve has a large distance to flow to reach the other pressure valve. This facilitates a delay between the pressure increase in the pressure chamber facing the active pressure valve and the pressure increase in the pressure chamber facing away the active pressure valve.

In a second preferred embodiment, in the coupling position the bypass fluidically connects the first pressure chamber and the second pressure chamber. In the neutral position the bypass fluidically connects the second pressure chamber and the third pressure chamber. In the neutral position, the bypass does not fluidically connect the second pressure chamber and the fourth pressure chamber. The effect of the fluid flowing from the second pressure chamber into the third pressure chamber is much stronger in contrast to the first pressure chamber due to the lower functional volume. The lower functional volume in the third pressure chamber allows a faster pressure balancing between the second pressure chamber and the third pressure chamber due to the bypass. As soon as the piston collar and the first seal engage, thus reducing the functional volume, the pressure in the third pressure chamber increases so rapidly that the deceleration effect increases rapidly as well.

Preferably, the cylinder body comprises a first receiving portion to receive the first seal. The first receiving portion may be formed as a first recess with a first portion diameter, wherein the first seal is arranged inside the first recess. Preferably, the cylinder body comprises a second receiving portion to receive the deformed first seal. As soon as the piston collar and the first seal engage, the first seal will be deformed, in particular a first sealing lip of the first seal is urged in the positive stroke direction. The second receiving portion allows the urging of the first seal by the piston collar with reduced friction and thus provides a durable sealing of the piston collar in the neutral position. The second receiving portion may be formed as a second recess with a second portion diameter, wherein the second portion diameter is lower than the first portion diameter. This leads to an exact radial and axial positioning of the first seal. The cylinder body further comprises a third receiving portion to receive a second seal with a second seal lip. The third receiving portion may be formed as a third recess with a third portion diameter, wherein the third portion diameter is lower than the second portion diameter. The cylinder body may further comprise a fourth receiving portion to receive a third seal lip of the second seal. The fourth receiving portion may be formed as a fourth recess with a fourth portion diameter, wherein the fourth portion diameter is lower than the third portion diameter. The third receiving portion and the fourth receiving portion leads to an exact radial and axial positioning of the second seal. Further, the cylindric body may provide a functional portion that is arranged between the second receiving portion and the third receiving portion. The functional portion may be formed as a functional recess with functional diameter, wherein the functional diameter is lower than the second receiving portion and higher than the third receiving portion. In the neutral position, the third pressure chamber is mainly formed by the functional portion enclosed by the cylindric body, the first seal, the second seal and the piston collar.

According to the present invention, the above stated object is solved by a method according to independent claim 7.

The method is defined by the following steps:
a) The second chamber is pressurized and accelerates the piston head in the positive stroke direction from the coupling position into the neutral position. This takes place in a first phase of the process, wherein the pneumatic chamber is separated into a first pressure chamber and a second pressure chamber.
b) The first phase is followed by a second phase once the piston head and the first seal engage. Thereby, the first pressure chamber is separated into a third pressure chamber and a fourth pressure chamber. This reduces the functional volume for deceleration.
c) In the second phase, the third pressure chamber is pressurized to decelerate and at the end to stop the movement of the piston head. The neutral position is reached either when the piston head stops or beforehand, e.g., when the piston head engages with the first seal.

Preferred embodiments of the present invention are laid down in the dependent claims.

Preferably, the pneumatic piston comprises a bypass, wherein in the second phase the third pressure chamber is pressurized trough the bypass by the second pressure chamber to decelerate the movement of the piston head. This ensures a rapid deceleration as soon as the second phase begins.

In further preferred embodiment, a second pressure valve is arranged at the second pressure chamber to pressurize the second pressure chamber and to move the piston head in the positive stroke direction from the coupling position into the neutral position. Thereby, the first pressure chamber is pressurized simultaneously by the second pressure valve through the bypass, wherein the bypass causes a delay between the pressuring of the second pressure chamber and the first pressure chamber. Therefore, one pressure valve can be used to, first, accelerate the piston head and then, decelerate the piston head in the desired position.

Preferably, the second pressure chamber is pressurized to a pressure p2 to accelerate the piston head in the positive stroke direction from the coupling position into the neutral position. The third pressure chamber is pressurized to a pressure p3 to decelerate the movement of the piston head in the second phase and stop the movement of the piston in the neutral position. Preferably, the second pressure p2 is lower than the third pressure p3.

Preferably, in the second phase a pressure balancing between the second pressure chamber and the third pressure chamber is provided through the bypass.

According to the present invention, the above stated object is solved by a gearbox, in particular a gearbox for a commercial vehicle, according to claim 12.

According to the present invention, the above stated object is solved by a commercial vehicle according to claim 13.

For a more complete understanding of the invention, the invention will now be described in detail with reference to the accompanying drawings. The detailed description will illustrate and describe what is considered as preferred embodiments of the invention, which is defined by the appended claims.

In particular, any reference signs in the claims shall not be construed as limiting the scope of the invention. The wording "comprising" or "including" does not exclude other elements or steps. The word "a" or "an" does not exclude the plurality. The wording "at least a" items comprising also the number 1, i.e. a single item, and further numbers like 2, 3, 4 and so forth. The word "about" includes a deviation of ± 3% of the total.

In the accompanying drawings:
- Fig. 1: shows a commercial vehicle having a gearbox comprising a pneumatic actuator;
- Fig. 2: shows a cut view of a known pneumatic actuator;
- Fig. 3: shows a cut view of a pneumatic actuator according to the invention in the coupling position;
- Fig. 4: shows a cut view of the pneumatic actuator according to Fig. 3 entering the second phase; and
- Fig. 5: shows a cut view of the pneumatic actuator according to Fig. 3 in the neutral position.

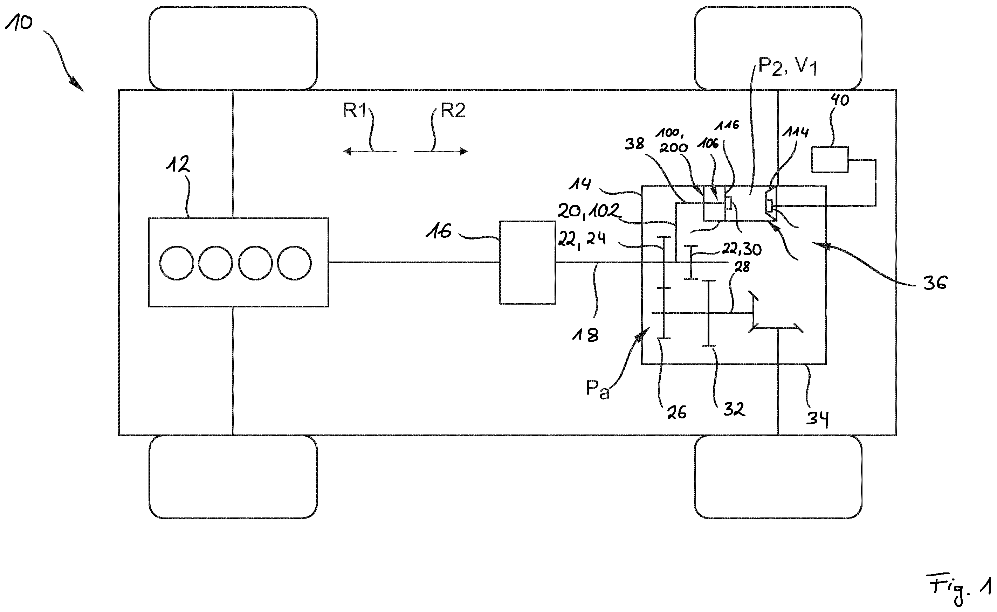

Fig. 1 shows a commercial vehicle 10 having a motor 12, a gearbox 14, a clutch 16 and a drive shaft 18 connecting the motor 12 to the clutch 16 and the gearbox 14. The gearbox 14 comprises a shifting fork 20. Using the shifting fork 20, first gear wheels 22 of the gearbox 14 can be actuated and moved in a positive stroke direction R1 or in a negative stroke direction R2. In Fig. 1, a larger first gear wheel 24 engages a smaller second gear wheel 26 of a driven shaft 28. Shifting fork 20 can be moved in negative stroke direction R2. Shifting fork 20 slides first gear wheels 22 along shaft 28 and thereby the larger first gear wheel 24 is disengaged from smaller second gear wheel 26 and a smaller first gear wheel 30 is brought into contact with a larger second gear wheel 32. Thereby a gear of the gearbox 14 is changed.

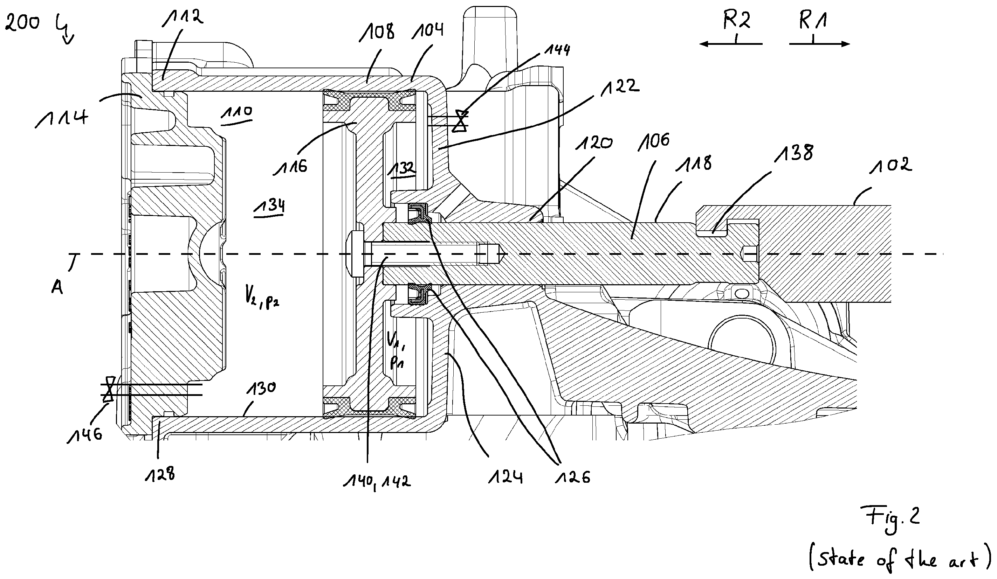

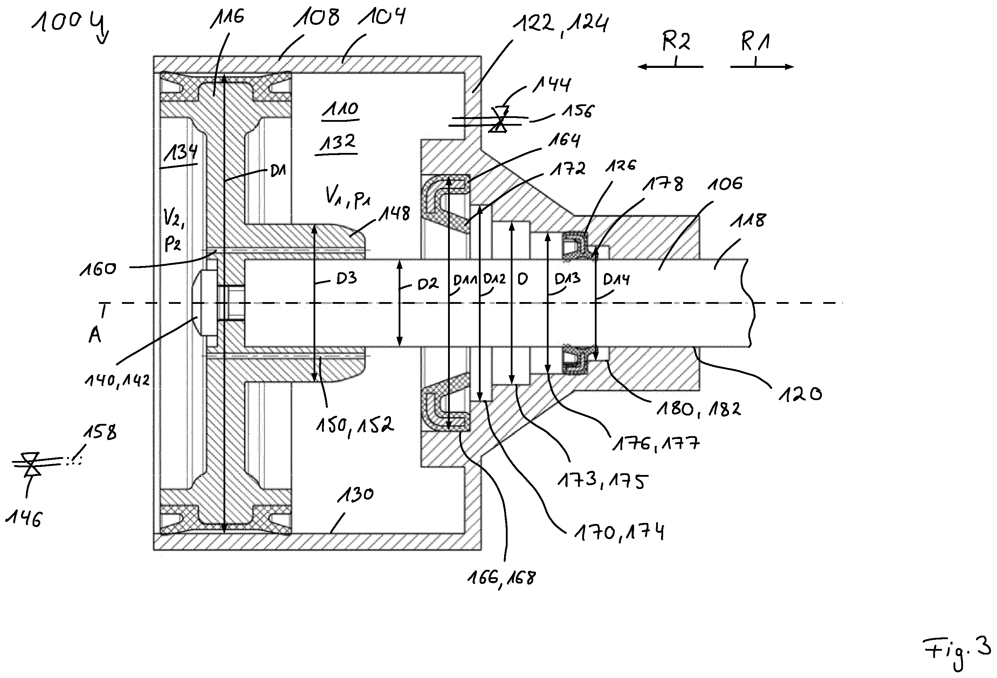

The gear of gearbox 14 may be changed of a known pneumatic actuator 200 shown in Fig. 2 or a pneumatic actuator 100 shown in Figs. 3-5. Pneumatic actuator 100, 200 may actuate a functional element 102 by a piston element 38, wherein functional element 102 is shifting shifting fork 20 of gearbox 14. Pneumatic actuator 100, 200 comprises a pneumatic cylinder 104 and a pneumatic piston 106. A cylinder body 108 of pneumatic cylinder 104 defines a pneumatic chamber 110, having a main axis A. On a first side 112, the pneumatic chamber 110 is closed by a cylinder head 114 of the pneumatic cylinder 104. Pneumatic cylinder 104 is integrally formed with a housing 34 of gearbox 14. In Fig. 1, pneumatic actuator 100, 200 is received inside the gearbox 100 in an interior 36.

A piston head 116 of pneumatic piston 106 is received in pneumatic chamber 110 of pneumatic cylinder 104. The piston head 116 is connected to a piston rod 118 of pneumatic piston 106 that extends through a cylinder orifice 120 of pneumatic cylinder 104 on a second side 122 opposite the first side 112. Piston rod 118 is sealed in cylinder body 108 by a second ring seal 126. The cylinder orifice 120 is formed in a bottom 124 of cylinder body 108. A first diameter D1 of piston head 116 is larger than a corresponding second diameter D2 of cylinder orifice 120. During assembly of pneumatic actuator 100 pneumatic piston 106 is inserted from first side 112 through a head opening 128. After insertion of pneumatic piston 106 head opening 128 of pneumatic chamber 110 is closed by cylinder head 114. However, the inner diameter D2 may also correspond to the maximum outer diameter D2 such that pneumatic piston 106 can be inserted into pneumatic chamber 110 from second side 122 through cylinder orifice 120.

Piston head 116, piston rod 118, an inner wall 130 of cylinder body 108 and second ring seal 126 enclose a first pressure chamber 132 with a first volume V1. For moving pneumatic piston 106 in negative stroke direction R2, a first pressure p1 is applied to the first volume V1. Opposite the first volume V1, a second pressure chamber 134 with a second volume V2 is enclosed by piston head 116, inner wall 130 of cylinder body 108 and cylinder head 114. For moving pneumatic piston 106 in positive stroke direction R1, a second pressure p2 is applied to the second volume V2.

If first pressure p1 exceeds an ambient pressure pa, that also applies to the second volume V2, the first volume V1 is increased and pneumatic piston 106 performs a negative stroke in negative stroke direction R2. If second pressure p2 exceeds ambient pressure pa, that also applies to first volume V1, second volume V2 is increased and pneumatic piston 106 performs a positive stroke in positive stroke direction R1. A bearing guides pneumatic piston 106 such that positive stroke direction R1 and negative stroke direction R2 is parallel to main axis A.

By applying varying pressures p1, p2 to first volume V1 and second Volume V2 pneumatic piston 106 is movable back and forth with regard to pneumatic cylinder 104. In a neutral position opposite the piston head 116, piston rod 118 is not engaged with the functional element 102. In a coupling position opposite the neutral position near piston head 116, piston rod 118 is engaged with functional element 102. Piston rod 118 transmits the movement of piston head 116 to functional element 102. When pneumatic piston 106 performs a positive stroke in positive stroke direction R1 functional element 102 engaging the piston rod 118 is actuated and moved in positive stroke direction R1 as well. During a negative stroke of pneumatic piston 106 in negative stroke direction R2, functional element 2 is also moved in negative stroke direction R2.

For engaging functional element 102, piston rod 118 comprises a groove 138. Preferably groove 138 is a substantially U-shaped groove 138. Additionally or alternatively, piston rod 118 may also comprise a radial projection (not shown) for engaging functional element 102. Groove 138 extends along the entire circumference of piston rod 118. However, groove 138 may also extend only partially around the circumference of the piston rod 118.

Pneumatic piston 106 is a two-part construction. Piston head 116 and piston rod 118 are manufactured independently and attached to each other up-on assembly of pneumatic piston 106. A connection member 140 attaches piston head 116 to piston rod 118, wherein connection member 140 may be a screw 142. Pneumatic piston 106 may also be one part.

To apply varying pressures to first pressure chamber 132 a first pressure valve 144 and to second pressure chamber 134 a second pressure valve 146 is provided. First pressure valve 144 and/or second pressure valve 146 may be formed as a 3-2 directional control valve. For accelerating and decelerating pneumatic piston 106 first pressure chamber 132 and second pressure chamber 134 must be pressurized or vented. If the piston head 116 is in the coupling position, near cylinder head 114, second pressure valve 146 is in a first position that second pressure chamber 134 get pressurized, while first pressure valve 144 is in a second position that first pressure chamber 132 gets vented. Due to the pressure difference between first volume V1 and second volume V2 pneumatic piston 106 gets accelerated in positive stroke direction R1. As soon as piston head 116 approaches the neutral position, piston head 116 must be decelerated. For this purpose, first pressure valve 144 is switched, so first pressure chamber 132 gets pressurized as well. As soon as a pressure balancing has been achieved, pneumatic piston 106 comes to a stop. Accordingly, in the state of the art the movement of pneumatic piston 106 requires both a switching of second pressure valve 146 for acceleration and a switching of first pressure valve 144 for deceleration. Due to the high number of switching operations, pressure 144, 146 valves are subjected to a high load.

To counteract the high load, the switching cycles of the pressure valves 144, 146 should be reduced. One embodiment of the invention is shown in Figs. 3-5, where identical elements in the prior art and in the invention have the same reference signs. Figs. 3-5 shows a detail of pneumatic actuator 100 according to the invention, wherein especially piston rod 118 and first pressure chamber 134 are equally designed to the known pneumatic actuator 200 from Fig. 2.

Pneumatic piston 106 further comprises a piston collar 148 with a diameter D3, wherein piston collar 148 is arranged concentrically to main axis A and partially encircles piston rod 108. Piston collar 148 comprises a bypass 150, wherein bypass 150 is made of six through holes 152. Through holes 152 are extending parallel to main axis A and are arranged at a circular ring that is concentrically to main axis A and having an angular distance of 60°. Using bypass 150, fluid can flow from first pressure chamber 132 to second pressure chamber 134 and the other way around. First pressure valve 144 has a first cross sectional area 154 perpendicular to main axis A and second pressure valve 146 has a second cross sectional area 156 perpendicular to main axis A, wherein first cross sectional area 154 and second cross sectional area 156 are equal. Bypass 150 has a third cross sectional area 158 perpendicular to main axis A that is built by the sum of each cross sectional area of the at least a through hole 152. The quotient of first cross sectional area 154 and third cross sectional area 158 is less than 100:1 and/or more than 2:1, in particular less than 50:1 and/or more than 3:1, preferably less than 20:1 and/or more than 5:1, and further preferably about 10:1. The quotient of second cross sectional area 156 and third cross sectional area 158 is less than 100:1 and/or more than 2:1, in particular less than 50:1 and/or more than 3:1, preferably less than 20:1 and/or more than 5:1, and further preferably about 10:1. An above mentioned quotient facilitates a delay between the pressuring of the pressure chamber facing the active pressure valve and the pressure chamber facing away from the pressure valve. As a result, piston head 116 is, first, accelerated in positive stroke direction R1 by the pressurized fluid provided by second pressure valve 146. Second, the fluid flows with a delay through the bypass 150 into first pressure chamber 132 and promotes the deceleration of piston head 116.

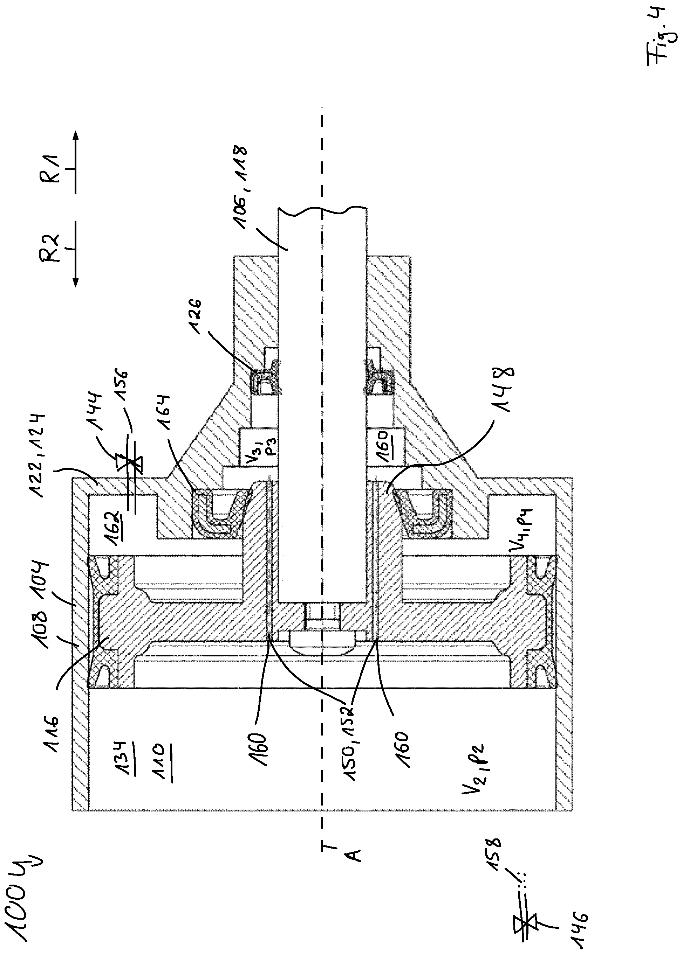

Fig. 3 shows piston head 116 in the coupling position and the first phase. During the movement of piston head 116 in positive stroke direction R1, first pressure valve 144 is venting first pressure chamber 134. A controller 40 is provided to control at least first pressure valve 144 and second pressure valve 146. Pneumatic piston 106 moves in positive stroke direction R1 from the coupling position into the neutral position. As long as bypass 150 is fluidically connected to first pressure valve 144, pneumatic piston 106 is in the first phase. To enter the second phase, first pressure chamber 132 must be separated into a third pressure chamber 160 with a third volume V3 and a fourth pressure chamber 162 with a fourth volume V4. Fig. 4 shows piston head 116 between the coupling position and the neutral position in the second phase.

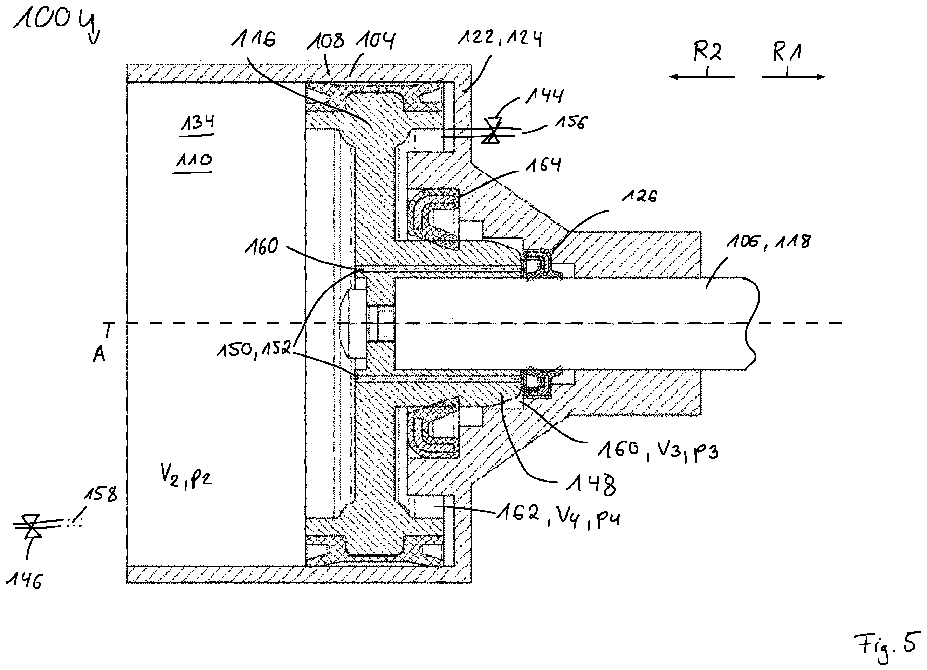

For this purpose, cylinder body 108 provides a first ring seal 164, which engages with piston collar 148. As soon as piston head 116 has sufficiently moved in positive stroke direction R1, piston collar 148 engages in first ring seal 164. First ring seal 164 seals piston collar 148 in such a way that first pressure chamber 132 is separated into third pressure chamber 160 and fourth pressure chamber 162. Bypass 150 is arranged on piston collar 148 in such a way that it leads from second pressure chamber 134 into third pressure chamber 160. Accordingly, bypass 150 is no longer fluidically connected to first pressure valve 144. The fluid continues to flow from second pressure chamber 134 through bypass 150 into third pressure chamber 160. Due to the smaller volume of third volume V3 in contrast to first volume V1, the pressure balancing takes place much faster than with the larger first volume V1. The further deceleration begins with the second phase. The pressure p3 increases until piston head 116 comes to a stop, as shown in Fig. 5. In contrast to the state of the art, first pressure valve 144 does not have to be switched from venting to pressuring for deceleration of pneumatic piston 106, but the pressure balancing is achieved by bypass 150 in piston collar 148. Consequently, one switching operation is saved.

Figs. 4 and 5 show pneumatic piston 106 in the second phase, third pressure chamber 160 is enclosed by cylinder body 108, first ring seal 164, second ring seal 126 and piston collar 148.

To ensure exact radial and axial positioning of first seal 164 and second seal 126, cylinder body 108 comprises receiving portions. In Fig. 3, cylinder body 108 comprises a first receiving portion 166 to receive first ring seal 164. First receiving portion 166 is formed as a first recess 168 with a first portion diameter D11, wherein first seal 164 is arranged the first recess 168. Preferably, cylinder body 108 comprises a second receiving portion 170 to receive the deformed first seal 164. As soon as piston collar 148 and first seal 164 engage, first seal 164 will be deformed, in particular a first sealing lip 172 of first seal 164 is urged in positive stroke direction R1 (not shown in Figs. 4 and 5). Second receiving portion 170 allows the urging of first seal 164 by piston collar 148 with reduced friction and thus provides a durable sealing of piston collar 148 in the neutral position. Third pressure chamber 162 is mainly build by a functional portion 173, wherein functional portion is made by a function recess 175 with a functional diameter Df. Second receiving portion 170 is formed as a second recess 174 with a second portion diameter D12, wherein second portion diameter D12 is less than first portion diameter D11. This leads to an exact radial and axial positioning of first seal 164. Cylinder body 108 further comprises a third receiving portion 176 to receive second seal 126 with a second seal lip 178. Third receiving portion 176 is formed as a third recess 177 with a third portion diameter D13. Cylinder body 108 further comprises a fourth receiving portion 180 to receive a third seal lip 182 of second seal 126. Fourth receiving portion 180 is formed as a fourth recess 182 with a fourth portion diameter D14. Third receiving portion 176 and fourth receiving portion 180 leads to an exact radial and axial positioning of second seal 126.

### List of reference signs (part of the description):

- 10: commercial vehicle
- 12: motor
- 14: gearbox
- 16: clutch
- 18: drive shaft
- 20: shifting fork
- 22: first gear wheels
- 24: larger first gear wheel
- 26: smaller second gear wheel
- 28: driven shaft
- 30: smaller first gear wheel
- 32: larger second gear wheel
- 34: housing
- 36: interior
- 38: piston element
- 40: controller
- 100: pneumatic actuator according to the invention
- 102: functional element
- 104: pneumatic cylinder
- 106: pneumatic piston
- 108: cylinder body
- 110: pneumatic chamber
- 112: first side of pneumatic chamber
- 114: cylinder head
- 116: piston head
- 118: piston rod
- 120: cylinder orifice
- 122: second side of pneumatic chamber
- 124: bottom of cylinder body
- 126: second ring seal
- 128: head opening of pneumatic chamber
- 130: inner wall of cylinder body
- 132: first pressure chamber
- 134: second pressure chamber
- 136: bearing
- 138: groove
- 140: connection member
- 142: screw
- 144: first pressure valve
- 146: second pressure valve
- 148: piston collar
- 150: bypass
- 152: through holes
- 154: first cross sectional area
- 156: second cross sectional area
- 158: third cross sectional area
- 160: third pressure chamber
- 162: fourth pressure chamber
- 164: first ring seal
- 166: first receiving portion
- 168: first recess
- 170: second receiving portion
- 172: first sealing lip of first ring seal
- 173: functional portion
- 174: second recess
- 175: functional recess
- 176: third receiving portion
- 177: third recess
- 178: second seal lip of second ring seal
- 180: fourth receiving portion
- 182: fourth recess
- 200: known pneumatic actuator
- A: main axis
- D1: first diameter
- D2: second diameter
- D3: third diameter
- Df: functional diameter
- D11: first portion diameter
- D12: second portion diameter
- D13: third portion diameter
- D14: fourth portion diameter
- pa: ambient pressure
- p1: first pressure
- p2: second pressure
- p3: third pressure
- p4: fourth pressure
- R1: positive stroke direction
- R2: negative stroke direction
- V1: first volume
- V2: second volume
- V3: third volume
- V4: fourth volume

## Claims

1. A pneumatic actuator (100) for actuating a shifting fork (102) of a gearbox (14) of a commercial vehicle (10), comprising:
a pneumatic cylinder (104), the pneumatic cylinder (104) comprising:
a cylinder body (108) defining a pneumatic chamber (110) having a main axis (A),
a cylinder head (114) closing the pneumatic chamber (110), and
a pneumatic piston (106) for actuating the shifting fork, the pneumatic piston (106) comprising:
a piston head (116),
a piston rod (118) for connecting the piston head (116) to the shifting fork (102),
wherein the piston head (116) is received in the pneumatic chamber (110) slidable along the main axis (A) between a coupling position and a neutral position,
wherein the neutral position refers to a position in which the piston rod (118) is configured such that it is not engaged with the shift fork (102) and wherein the coupling position refers to a position in which the piston rod (118) is configured such that it is engaged with the shift fork (102),
wherein the piston head (116) is configured such that it separates the pneumatic chamber (110) into a first pressure chamber (132) and a second pressure chamber (134), and
a bypass (150) fluidically connecting the first pressure chamber (132) and the second pressure chamber (134), wherein the pneumatic piston (106) further comprises a piston collar (148),
wherein the cylinder body (108) comprises a first seal (164),
wherein the piston rod (118) extends through said first seal (164), and
wherein in the neutral position the piston collar (148) is configured such that it engages with the first seal (164) to separate the first pressure chamber (132) into a third pressure chamber (160) and a fourth pressure chamber (162).

2. The pneumatic actuator (100) according to claim 1, wherein the pneumatic cylinder (104) further comprises:
a first pressure valve (144) with a first cross sectional area (154) for pressurizing and venting the first pressure chamber (132), and/or
a second pressure valve (146) with a second cross sectional area (156) for pressurizing and venting the second pressure chamber (134),
wherein the quotient of the first cross sectional area (154) and a third cross sectional area (158) of the bypass (150) and/or the quotient of the second cross sectional area (156) the second pressure valve (146) and a third cross sectional area (158) of the bypass (150) is lower than 100:1 and/or more than 2:1, in particular lower than 50:1 and/or more than 3:1, preferably lower than 20:1 and/or more than 5:1, and further preferably about 10:1.

3. The pneumatic actuator (100) according to claim 1 or 2, wherein the bypass (150) is formed by at least a through hole (152) extending parallel or oblique to the main axis (A).

4. The pneumatic actuator (100) according to claim 1, wherein the bypass (150) is provided at or in the piston collar (148).

5. The pneumatic actuator (100) according to claim 1 or 4,
wherein in the neutral position the bypass (150) fluidically connects the second pressure chamber (134) and the third pressure chamber (160).

6. The pneumatic actuator (100) according to claim 1, wherein the cylinder body (108) further comprising:
a first receiving portion (166) to receive the first seal (164), and/or
a second receiving portion (170) to receive the deformed first seal (164) during the engagement with the piston collar (148), and/or
a third receiving portion (176) to receive a second seal (126) arranged at the piston rod (118).

7. A method to actuate a shifting fork (102) of a gearbox of a commercial vehicle by using the pneumatic actuator according to any one of claims 1 to 6,
**characterized by** the following steps:
pressuring the second pressure chamber (134) to move the piston head (116) from the coupling position into the neutral position;
engaging the piston head (116) with the first seal (164) to separate the first pressure chamber (132) into a third pressure chamber (160) and a fourth pressure chamber (162); and
pressuring the third pressure chamber (160) to slow down the movement of the piston head (116).

8. The method according to claim 7, further **characterized by** pressurizing the third pressure chamber (160) through the bypass (150) by the first pressure chamber (132) to decelerate the movement of the piston head (116).

9. The method according to claim 8, further **characterized by** pressurizing the second pressure chamber (134) by a second pressure valve (146) arranged at the second pressure chamber (134) to move the piston head (116) from the coupling position into the neutral position, and
simultaneously pressurizing the first pressure chamber (132) by the second pressure valve (146) through the bypass (150) so as to cause a delay between the pressuring of the second pressure chamber (134) and the first pressure chamber (132).

10. The method according to any of the preceding claims 7, 8 or 9,
wherein the second pressure chamber (134) is pressurized to a second pressure (p2) to move the piston head (116) from the coupling position into the neutral position,
wherein the third pressure chamber (160) is pressurized to a third pressure (p3) to decelerate the movement of the piston head (116) in the neutral position, wherein the second pressure (p2) is lower than the third pressure (p3).

11. The method according to any of the preceding claims 7 to 10, further **characterized by** balancing the pressure between the second pressure chamber (134) and the third pressure chamber through the bypass (150).

12. A gearbox, in particular a gearbox (14) for a commercial vehicle (10), comprising a pneumatic actuator (100) according to any of the preceding claims 1 to 6.

13. A commercial vehicle (10) comprising a gearbox (14) according to claim 12.

## Patentansprüche

1. Pneumatischer Antrieb (100) zum Antreiben einer Schaltschwinge (102) eines Getriebes (14) eines Nutzfahrzeugs (10), umfassend:
einen pneumatischen Zylinder (104), der pneumatische Zylinder (104) umfassend:
einen Zylinderkörper (108), der eine pneumatische Kammer (110) definiert, die eine Hauptachse (A) aufweist,
einen Zylinderkopf (114), der die pneumatische Kammer (110) verschließt, und
einen pneumatischen Kolben (106) zum Antreiben der Schaltschwinge, der pneumatische Kolben (106) umfassend:
einen Kolbenkopf (116),
eine Kolbenstange (118) zum Verbinden des Kolbenkopfes (116) mit der Schaltschwinge (102),
wobei der Kolbenkopf (116) in der pneumatischen Kammer (110) entlang der Hauptachse (A) zwischen einer Kopplungsposition und einer Neutralposition verschiebbar aufgenommen ist,
wobei sich die Neutralposition auf eine Position bezieht, in der die Kolbenstange (118) derart konfiguriert ist, dass sie nicht mit der Schaltschwinge (102) in Eingriff steht, und wobei sich die Kopplungsposition auf eine Position bezieht, in der die Kolbenstange (118) derart konfiguriert ist, dass sie mit der Schaltschwinge (102) in Eingriff steht,
wobei der Kolbenkopf (116) derart konfiguriert ist, dass er die pneumatische Kammer (110) in eine erste Druckkammer (132) und eine zweite Druckkammer (134) trennt, und
einen Bypass (150), der die erste Druckkammer (132) und die zweite Druckkammer (134) fluidisch verbindet, wobei der pneumatische Kolben (106) ferner einen Kolbenbund (148) umfasst, wobei der Zylinderkörper (108) eine erste Dichtung (164) umfasst, wobei sich die Kolbenstange (118) durch die erste Dichtung (164) erstreckt, und
wobei der Kolbenbund (148) in der Neutralposition derart konfiguriert ist, dass er mit der ersten Dichtung (164) in Eingriff steht, um die erste Druckkammer (132) in eine dritte Druckkammer (160) und eine vierte Druckkammer (162) zu trennen.

2. Pneumatischer Antrieb (100) nach Anspruch 1, wobei der pneumatische Zylinder (104) ferner umfasst:
ein erstes Druckventil (144) mit einer ersten Querschnittsfläche (154) zum Druckbeaufschlagen und Entlüften der ersten Druckkammer (132), und/oder
ein zweites Druckventil (146) mit einer zweiten Querschnittsfläche (156) zum Druckbeaufschlagen und Entlüften der zweiten Druckkammer (134), wobei der Quotient der ersten Querschnittsfläche (154) und einer dritten Querschnittsfläche (158) des Bypasses (150) und/oder der Quotient der zweiten Querschnittsfläche (156) des zweiten Druckventils (146) und einer dritten Querschnittsfläche (158) des Bypasses (150) geringer als 100 : 1 und/oder größer als 2 : 1, insbesondere geringer als 50 : 1 und/oder größer als 3 : 1, vorzugsweise geringer als 20 : 1 und/oder größer als 5 : 1 und weiter vorzugsweise etwa 10 : 1 ist.

3. Pneumatischer Antrieb (100) nach Anspruch 1 oder 2, wobei der Bypass (150) durch mindestens ein Durchgangsloch (152) ausgebildet ist, das parallel oder schräg zu der Hauptachse (A) verläuft.

4. Pneumatischer Antrieb (100) nach Anspruch 1, wobei der Bypass (150) an oder in dem Kolbenbund (148) bereitgestellt ist.

5. Pneumatischer Antrieb (100) nach Anspruch 1 oder 4,
wobei der Bypass (150) in der Neutralposition die zweite Druckkammer (134) und die dritte Druckkammer (160) fluidisch verbindet.

6. Pneumatischer Antrieb (100) nach Anspruch 1, der Zylinderkörper (108) ferner umfassend:
einen ersten Aufnahmeabschnitt (166), um die erste Dichtung (164) aufzunehmen, und/oder
einen zweiten Aufnahmeabschnitt (170), um die verformte erste Dichtung (164) während des Eingriffs mit dem Kolbenbund (148) aufzunehmen, und/oder
einen dritten Aufnahmeabschnitt (176), um eine zweite Dichtung (126) aufzunehmen, die an der Kolbenstange (118) angeordnet ist.

7. Verfahren, um eine Schaltschwinge (102) eines Getriebes eines Nutzfahrzeugs durch Verwenden des pneumatischen Antriebs nach einem der Ansprüche 1 bis 6 anzutreiben,
**gekennzeichnet durch** die folgenden Schritte:
Druckbeaufschlagen der zweiten Druckkammer (134), um den Kolbenkopf (116) von der Kopplungsposition in die Neutralposition zu bewegen;
Ineingriffnehmen des Kolbenkopfes (116) mit der ersten Dichtung (164), um die erste Druckkammer (132) in eine dritte Druckkammer (160) und eine vierte Druckkammer (162) zu trennen; und
Druckbeaufschlagen der dritten Druckkammer (160), um die Bewegung des Kolbenkopfes (116) zu verlangsamen.

8. Verfahren nach Anspruch 7, ferner **gekennzeichnet durch** das Druckbeaufschlagen der dritten Druckkammer (160) über den Bypass (150) durch die erste Druckkammer (132), um die Bewegung des Kolbenkopfes (116) abzubremsen.

9. Verfahren nach Anspruch 8, ferner **gekennzeichnet durch** das Druckbeaufschlagen der zweiten Druckkammer (134) durch ein zweites Druckventil (146), das an der zweiten Druckkammer (134) angeordnet ist, um den Kolbenkopf (116) aus der Kopplungsposition in die Neutralposition zu bewegen, und
gleichzeitiges Druckbeaufschlagen der ersten Druckkammer (132) durch das zweite Druckventil (146) über den Bypass (150), um eine Verzögerung zwischen dem Druckbeaufschlagen der zweiten Druckkammer (134) und der ersten Druckkammer (132) zu bewirken.

10. Verfahren nach einem der vorstehenden Ansprüche 7, 8 oder 9,
wobei die zweite Druckkammer (134) auf einen zweiten Druck (p2) druckbeaufschlagt wird, um den Kolbenkopf (116) von der Kopplungsposition in die Neutralposition zu bewegen,
wobei die dritte Druckkammer (160) auf einen dritten Druck (p3) druckbeaufschlagt wird, um die Bewegung des Kolbenkopfes (116) in der Neutralposition auszubremsen, wobei der zweite Druck (p2) geringer als der dritte Druck (p3) ist.

11. Verfahren nach einem der vorstehenden Ansprüche 7 bis 10, ferner **gekennzeichnet durch** ein Ausgleichen des Drucks zwischen der zweiten Druckkammer (134) und der dritten Druckkammer über den Bypass (150).

12. Getriebe, insbesondere ein Getriebe (14) für ein Nutzfahrzeug (10), umfassend einen pneumatischen Antrieb (100) nach einem der vorstehenden Ansprüche 1 bis 6.

13. Nutzfahrzeug (10), umfassend ein Getriebe (14) nach Anspruch 12.

## Revendications

1. Actionneur pneumatique (100) permettant d'actionner une fourchette de changement de vitesse (102) d'une boîte de vitesses (14) d'un véhicule utilitaire (10), comprenant :
un cylindre pneumatique (104), le cylindre pneumatique (104) comprenant :
un corps de cylindre (108) définissant une chambre pneumatique (110) ayant un axe principal (A),
une culasse (114) fermant la chambre pneumatique (110), et
un piston pneumatique (106) permettant d'actionner la fourchette de changement de vitesse, le piston pneumatique (106) comprenant :
une tête de piston (116),
une tige de piston (118) pour relier la tête de piston (116) à la fourchette de changement de vitesse (102),
dans lequel la tête de piston (116) est reçue dans la chambre pneumatique (110) coulissant le long de l'axe principal (A) entre une position de couplage et une position neutre,
dans lequel la position neutre fait référence à une position dans laquelle la tige de piston (118) est conçue de telle sorte qu'elle n'est pas en prise avec la fourchette de changement de vitesse (102) et dans lequel la position de couplage fait référence à une position dans laquelle la tige de piston (118) est conçue de telle sorte qu'elle est en prise dans la fourchette de changement de vitesse (102),
dans lequel la tête de piston (116) est conçue de manière à séparer la chambre pneumatique (110) en une première chambre de pression (132) et une deuxième chambre de pression (134), et
une dérivation (150) reliant fluidiquement la première chambre de pression (132) et la deuxième chambre de pression (134), dans lequel le piston pneumatique (106) comprend en outre un collet de piston (148), dans lequel le corps de cylindre (108) comprend un premier joint (164), dans lequel la tige de piston (118) s'étend à travers ledit premier joint (164), et
dans lequel, dans la position neutre, le collet de piston (148) est conçu de telle sorte qu'il vient en prise
avec le premier joint (164) pour séparer la première chambre de pression (132) en une troisième chambre de pression (160) et une quatrième chambre de pression (162).

2. Actionneur pneumatique (100) selon la revendication 1, dans lequel le cylindre pneumatique (104) comprend en outre :
une première soupape de pression (144) avec une première aire de section transversale (154) pour pressuriser et purger la première chambre de pression (132), et/ou
une deuxième soupape de pression (146) avec une deuxième aire de section transversale (156) pour pressuriser et purger la deuxième chambre de pression (134),
dans lequel le quotient de la première aire de section transversale (154) et de la troisième aire de section transversale (158) de la dérivation (150) et/ou le quotient de la deuxième aire de section transversale (156) de la deuxième soupape de pression (146) et de la troisième aire de section transversale (158) de la dérivation (150) est inférieur à 100:1 et/ou supérieur à 2:1, en particulier inférieur à 50:1 et/ou supérieur à 3:1, de préférence inférieur à 20:1 et/ou supérieur à 5:1, et manière plus préférée environ 10:1.

3. Actionneur pneumatique (100) selon la revendication 1 ou 2, dans lequel la dérivation (150) est formée par au moins un trou traversant (152) s'étendant parallèlement ou obliquement à l'axe principal (A).

4. Actionneur pneumatique (100) selon la revendication 1, dans lequel la dérivation (150) est prévue au niveau du collet de piston (148) ou dans celui-ci.

5. Actionneur pneumatique (100) selon la revendication 1 ou 4,
dans lequel, dans la position neutre, la dérivation (150) relie fluidiquement la deuxième chambre de pression (134) et la troisième chambre de pression (160).

6. Actionneur pneumatique (100) selon la revendication 1, dans lequel le corps de cylindre (108) comprenant en outre :
une première partie de réception (166) pour recevoir le premier joint (164), et/ou
une deuxième partie de réception (170) pour recevoir le premier joint (164) déformé pendant la mise en prise avec le collet de piston (148), et/ou
une troisième partie de réception (176) pour recevoir un second joint (126) agencé au niveau de la tige de piston (118).

7. Procédé d'actionnement d'une fourchette de changement de vitesse (102) d'une boîte de vitesses d'un véhicule utilitaire à l'aide de l'actionneur pneumatique
selon l'une quelconque des revendications 1 à 6,
**caractérisé par** les étapes suivantes :
pressurisation de la deuxième chambre de pression (134) pour déplacer la tête de piston (116) de la position de couplage à la position neutre ;
mise en prise de la tête de piston (116) avec le premier joint (164) pour séparer la première chambre de pression (132) en une troisième chambre de pression (160) et une quatrième chambre de pression (162) ; et
pressurisation de la troisième chambre de pression (160) pour ralentir le déplacement de la tête de piston (116).

8. Procédé selon la revendication 7, **caractérisé par,** en outre, la pressurisation de la troisième chambre de pression (160) à travers la dérivation (150) par la première chambre de pression (132) pour décélérer le déplacement de la tête de piston (116).

9. Procédé selon la revendication 8, **caractérisé par,** en outre, la pressurisation de la deuxième chambre de pression (134) par une deuxième soupape de pression (146) agencée au niveau de la deuxième chambre de pression (134) pour déplacer la tête de piston (116) de la position de couplage à la position neutre, et
la pressurisation simultanée de la première chambre de pression (132) par la deuxième soupape de pression (146) à travers la dérivation (150) de manière à provoquer un délai entre la pressurisation de la deuxième chambre de pression (134) et celle de la première chambre de pression (132).

10. Procédé selon l'une quelconque des revendications précédentes 7, 8 ou 9,
dans lequel la deuxième chambre de pression (134) est pressurisée à une deuxième pression (p2) pour déplacer la tête de piston (116) de la position de couplage à la position neutre,
dans lequel la troisième chambre de pression (160) est pressurisée à une troisième pression (p3) pour décélérer le déplacement de la tête de piston (116) dans la position neutre, dans lequel la deuxième pression (p2) est inférieure à la troisième pression (p3).

11. Procédé selon l'une quelconque des revendications précédentes 7 à 10, **caractérisé par,** en outre, l'équilibrage de la pression entre la deuxième chambre de pression (134) et la troisième chambre de pression à travers la dérivation (150).

12. Boîte de vitesses, en particulier boîte de vitesses (14) destinée à un véhicule utilitaire (10), comprenant un actionneur pneumatique (100) selon l'une quelconque des revendications 1 à 6 précédentes.

13. Véhicule utilitaire (10) comprenant une boîte de vitesses (14) selon la revendication 12.
